# EUROPEAN PATENT SPECIFICATION

(11) **EP 3 640 048 B1**
(45) Date of publication and mention of the grant of the patent: **13.04.2022**
(21) Application number: 18816968.4
(22) Date of filing: 25.04.2018
(51) Int. Cl.: B60C 5/01, B60C 5/00, B60C 9/00, B60C 9/18, B60C 13/00, C08L 67/00, C08L 75/04, C08L 77/00, D07B 1/06, B60C 9/22

(54) **TIRE**
REIFEN
PNEUMATIQUE

(30) Priority: 12.06.2017 JP 2017115090
(43) Date of publication of application: 22.04.2020
(73) Proprietor: Bridgestone Corporation, Tokyo 104-8340 (JP)
(72) Inventor: KYO, Soichi, Tokyo 104-8340 (JP); FUDEMOTO, Hiroyuki, Tokyo 104-8340 (JP)
(74) Representative: Oxley, Robin John George
(86) International application number: PCT/JP2018/016841
(87) International publication number: WO 2018/230168

(56) References cited:
- EP-A1- 2 676 809
- EP-A1- 2 821 248
- EP-A1- 2 821 250
- WO-A1-2013/129628
- WO-A1-2013/129629
- JP-A- H03 148 302
- JP-A- 2012 046 028
- JP-A- 2013 071 479
- JP-A- 2014 097 800
- US-A- 3 888 291

## Description

### Technical Field

The present invention relates to a tire.

### Background Art

Conventionally, tires mainly made of rubber have been used in vehicles such as passenger vehicles. In recent years, in contrast, the use of resins as materials for tires, instead of rubber, have been investigated, from the viewpoints of achieving a reduction in weight, ease of forming, ease of recycling, and the like (see, for example, Patent Document 1). Reference is also made to EP 2676809, EP 2821250 and EP 2821248.

Patent Document 1: Japanese Patent Application Laid-Open (JP-A) No. 2012-046030.

### SUMMARY OF INVENTION

### Technical Problem

Tires including tire frames composed of resin materials containing resins can be produced more easily and at a lower cost, as compared to conventional tires made of rubber. Further, in tires including tire frames composed of resin materials, performance of the tires can be easily controlled by changing compositions, thicknesses and/or the like of the resin materials.

For example, by changing the compositions and/or the thicknesses of the resin materials to reduce hardnesses of side portions of tire frames, it is possible to impart flexibility to the tire frames, which leads to a larger grounding area of the resulting tires. A larger grounding area of the tires leads to an increased gripping force of the tires, and thereby facilitates a more stable steering operation. In particular, at a time of turning a gentle curve on a wet road surface, it is required to increase the grounding area of the tires in order to improve cornering performance and to thereby reduce the occurrence of slip.

However, in tires including tire frames composed of resin materials, the shape of the tires is maintained by the resin materials themselves. Therefore, the shape of the tires needs to be maintained in an environment heated by heat of an engine and brakes, and thus, the resin materials are required to have heat resistance. On the other hand, an attempt to reduce the hardness of the side portions, by changing the compositions and the like of the resin materials, often results in a decrease in the heat resistance of the resin materials constituting the side portions, as well. Therefore, it is difficult to achieve both of these properties at the same time.

In view of the above facts, an object of the present invention is to provide a tire which includes a tire frame composed of resin materials, and in which both cornering performance on a gentle curve and heat resistance are improved.

Specific means for addressing the problem described above include the following embodiment.
<1> A tire including an annular tire frame composed of a plurality of kinds of resin materials, wherein an Asker D hardness Ho of a side portion of the tire frame, which side portion is to be located on an outer side in a vehicle width direction when the tire is mounted on a vehicle, is lower than an Asker D hardness Hi of a side portion of the tire frame, which side portion is to be located on an inner side in the vehicle width direction when the tire is mounted on the vehicle, and wherein a resin contained as a main component in a resin material constituting the side portion of the tire frame, which side portion is to be located on the inner side in the vehicle width direction when the tire is mounted on the vehicle, has a melting point of 140°C or higher, or does not have a melting point and has a glass transition point of 40°C or higher.

According to the present invention a tire which includes a tire frame composed of resin materials, and in which both cornering performance on a gentle curve and heat resistance are improved, can be provided.

### BRIEF DESCRIPTION OF DRAWINGS

FIG. 1 is a cross-sectional view showing a configuration of a tire according to a first embodiment, taken along a tire width direction.
FIG. 2 is a cross-sectional perspective view showing a step of winding a resin coated cord on a tire frame.
FIG. 3 is a cross-sectional perspective view showing a configuration of a tire according to a second embodiment, taken along the tire width direction.

### DESCRIPTION OF EMBODIMENTS

Specific embodiments of the invention are described below in detail; however, the invention is not restricted to the following embodiments by any means, and the invention can be carried out with modifications as appropriate within the intended scope of the appended claims.

In the present specification, those numerical ranges that are stated with "to" each denote a range that includes the numerical values stated before and after "to" as the lower and upper limit values, respectively.

The term "step" used herein encompasses not only discrete steps but also those steps which cannot be clearly distinguished from other steps, as long as the intended purpose of the step is achieved.

In the present specification, when reference is made to the amount of a component contained in a composition and there are plural substances corresponding to the component in the composition, the indicated amount of the component means the total amount of the plural substances existing in the composition unless otherwise specified.

The "main component" herein refers to a component having the highest content on a mass basis in a mixture, unless particularly noted.

In the present specification, the term "resin" is a concept which includes a thermoplastic resin (including a thermoplastic elastomer) and a thermosetting resin. A vulcanized rubber is not included in the definition of the "resin".

In the present specification, the term "thermoplastic resin" refers to a polymer compound which is a material that softens and flows as a temperature increases, and turns into a relatively hard and strong state when cooled. A thermoplastic elastomer is also included in the definition of the "thermoplastic resin".

The term "rubber" refers to a polymer compound having an elasticity. However, in the present specification, a rubber is distinguished from a thermoplastic resin elastomer.

The term "thermoplastic elastomer" refers to a material which softens and flows as the temperature increases, and turns into a relatively hard and strong state when cooled, and which has a rubber-like elasticity. The definition of the term "thermoplastic elastomer" includes both a thermoplastic resin composed of a copolymer including a hard segment and a soft segment, and a thermoplastic vulcanizate (TPV) which is a mixture of a thermoplastic resin as a main component and a rubber as an additive.

### «Tire»

A tire according to one embodiment of the present invention includes an annular tire frame composed of a plurality of kinds of resin materials, wherein the Asker D hardness Ho (hereinafter, also simply referred to as "hardness Ho") of the side portion (hereinafter, also referred to as "outer side portion") of the tire frame which side portion is to be located on the outer side in the vehicle width direction when the tire is mounted on a vehicle, is lower than the Asker D hardness Hi (hereinafter, also simply referred to as "hardness Hi") of the side portion (hereinafter, also referred to as "inner side portion") of the tire frame which side portion is to be located on the inner side in the vehicle width direction when the tire is mounted on the vehicle. In this tire, a resin (hereinafter, also referred to as "inner side resin") contained as a main component in the resin material constituting the inner side portion has a melting point of 140°C or higher, or does not have a melting point and has a glass transition point of 40°C or higher.

The expression "tire frame composed of a plurality of kinds of resin materials" as used herein means that the compositions of the resin materials constituting the tire frame vary depending on the portions of the tire frame. For example, a tire frame obtained by separately forming two half bodies of the tire frame, using resin materials having different compositions, and then joining these half bodies together, is a "tire frame composed of two kinds resin materials. Further, for example, a tire frame obtained by separately forming the inner side portion, the outer side portion, and a crown portion, using resin materials having different compositions, and then joining these portions together, is a "tire frame composed of three kinds resin materials.

Examples of the "resin materials having different compositions" include resin materials containing different components (for example, containing different resins, additives, etc.), and resin materials containing the same components at different contents.

The term "side portion" of the tire frame refers to a portion of the tire frame extending from a bead portion to a tread end on each side of the frame.

The term "tread end" as used herein refers to each outermost end of a grounded portion of a tire in the tire width direction, when: the tire is mounted on a standard rim defined in JATMA YEAR BOOK (Japan Automobile Tire Manufacturers Association Standard, 2014 Edition); the tire is filled to an internal pressure which is 100% of an air pressure (maximum air pressure) corresponding to a maximum load capacity (a load shown in bold face letters in an internal pressure-load capacity table) at an applicable size and ply rating defined in JATMA YEAR BOOK; and the maximum load capacity is applied to the tire. In a case in which TRA standard or ETRTO standard is applied at the place of production or the place of use, the corresponding standard should be followed.

The term "bead portion" refers to a portion of the tire frame extending form an inner end in a tire radial direction to a position corresponding to 30% of a cross-sectional tire height, on each side of the frame. The term "crown portion" refers to the portion of the tire frame extending from the tread end on one side to the tread end on the other side.

The Asker D hardness was determined by measuring the hardness of an outer surface of each side portion of the tire frame, in a tire axial direction, using an Asker D hardness tester (model number: CLE-150H, manufactured by Kobunshi Keiki Co., Ltd.), under the conditions of a temperature of 25°C and at a load of 5 kg.

The hardness Hi and the hardness Ho are configured such that the hardness of the inner side in the vehicle width direction is higher than the hardness of the outer side in the vehicle width direction. The hardness Hi and the hardness Ho refer to, when a distance between the tread end on the inner side in the vehicle width direction and the tread end on the outer side in the vehicle width direction is defined as "L", values of the Asker D hardness at positions corresponding to distances 3/5 L from a center (namely, a position corresponding to a distance 1/2 L from the tread end on the inner side or the tread end on the outer side; hereinafter, also referred to as "tread center line") between the tread end on the inner side and the tread end on the outer side, toward the inner and outer tread ends, respectively. Specifically, at each of the positions corresponding to distances 3/5 L from the tread center line, the measurement of the hardness was carried out at three locations spaced apart at regular intervals in a tire circumferential direction, in accordance with the method described above, and a mean value of the measured values are defined as the value of each Asker D hardness.

In other words, in the tire frame of the present tire, the Asker D hardness Ho at a position corresponding to 3/5 L from the tread center line toward the outer side portion (namely, at a position corresponding to 3/5 times the distance between the inner tread end and the outer tread end, from the tread center line) is lower than the Asker D hardness Hi at a position corresponding to 3/5 L from the tread center line toward the inner side portion.

The melting point and the glass transition point are measured in accordance with JIS K 7121 (2012), using a differential scanning calorimeter DSC.

Specifically, for example, a resin material piece (having a size of, for example, 5.0 mm × 5.0 mm × 1.0 mm) is cut out from a position corresponding to 3/5 L from the tread center line toward the inner side in the vehicle width direction, to be used as a measurement sample. The thus obtained measurement sample is placed on an aluminum pan, with an empty pan set for comparison, and the measurement is carried out at a temperature rise rate of 10°C/min. The melting points of indium and zinc are used for temperature correction of a detection section of a measuring apparatus, and a heat of fusion of indium is used for the correction of quantity of heat.

In other words, in the tire frame of the present tire, the resin contained as a main component in the resin material constituting the side portion at a position corresponding to 3/5 L from the tread center line toward the inner side in the vehicle width direction, has a melting point of 140°C or higher, or does not have a melting point and has a glass transition point of 40°C or higher.

The expression that the inner side resin "has a melting point" as used herein means that an endothermic peak derived from the inner side resin is observed in a DSC curve obtained by carrying out the measurement of the inner side resin. Further, the expression that the inner side resin "does not have a melting point" means that an endothermic peak derived from the inner side resin is not observed in the DSC curve obtained by carrying out the measurement of the inner side resin.

In other words, in the tire frame of the present tire, an endothermic peak derived from the inner side resin is observed in the DSC curve obtained by carrying out the measurement of the inner side resin, and the inner side resin has a melting point of 140°C or higher, or alternatively, an endothermic peak derived from the inner side resin is not observed in the DSC curve, and the inner side resin has a glass transition point of 40°C or higher.

In the tire, the hardness Ho of the outer side portion is lower than the hardness Hi of the inner side portion, and the inner side resin has a melting point of 140°C or higher, or does not have a melting point and has a glass transition point of 40°C or higher, as described above. This allows for improving both the cornering performance on a gentle curve and the heat resistance. The reason for this is assumed as follows.

As described above, it is desirable that the side portions of tire frames have a lower hardness from the viewpoint of increasing the grounding area of tires. Specifically, by reducing the hardness of the side portions, the flexibility of the tire frames is increased to result in a larger grounding area. A larger grounding area leads to an increase in the gripping force of the tires, thereby allowing for a stable steering operation and an improved cornering performance.

However, an attempt to reduce the hardness of the side portions, by changing the compositions and the like of the resin materials, often results in a decrease in the heat resistance of the resin materials constituting the side portions, as well. Unlike conventional rubber tires including a frame such as a carcass, the flexibility of tire frames composed of resin materials can be increased by changing the compositions and the thicknesses of the resin materials. At the same time, however, the resin materials themselves, which are responsible for maintaining the shape of tires, are required to have a heat resistance. Particularly, in a case in which a resin material contains a thermoplastic resin as a main component, it is preferred to select a resin capable of withstanding the heat of the engine and brakes, since a thermoplastic resin has a property to soften due to heat. However, it is difficult to select a resin which has both the flexibility and heat resistance.

Therefore, in the present tire, both the side portions are not adjusted to have the same value of properties (namely, the outer side portion and the inner side portion are not configured symmetrically), but the outer side portion and the inner side portion are adjusted to have different values of properties (namely, the outer side portion and the inner side portion are configured asymmetrically). Specifically, the hardness of the outer side portion is set lower than the hardness of the inner side portion, and a resin material containing, as a main component, a resin having a high melting point or a high glass transition point is used as the resin material constituting the inner side portion.

In other words, only the outer side portion, of the side portions of the tire frame in the tire, is configured to have a lower hardness. As a result, at least a region on the outer side in the vehicle width direction, of the outer surface of the tire in the tire radial direction, is more easily grounded on a road surface, resulting in a larger grounding area. Accordingly, even in the case of turning a gentle curve, the grounding area on the outer side in the vehicle width direction, in the tires located on the outer side of the curve, is increased, as a result of which the gripping force is enhanced, thereby improving the cornering performance. In a circumstance where the road surface is wet, for example, an increase in the grounding area on the outer side in the vehicle width direction, in the tires located on the outer side of the curve, reduces the occurrence of slip, even in the case of turning a gentle curve.

In addition, in the present tire, the heat resistance of the tire is improved, since the hardness of the inner side portion, of the side portions of the tire frame, is adjusted relatively higher, and a resin material containing, as a main component, a resin having a high melting point or a high glass transition point is used as the resin material constituting the inner side portion. Specifically, the inner side portion is required to have a higher heat resistance than the heat resistance of the outer side portion, since the heat of the engine and brakes is more likely to be entrapped in the inner side of a vehicle body. The above described configuration enables to impart heat resistance to the inner side portion, thereby improving the heat resistance of the tire as a whole.

It is assumed that both the cornering performance on a gentle curve and the heat resistance can be improved, when the hardness Ho of the outer side portion is lower than the hardness Hi of the inner side portion, and the inner side resin has a melting point of 140°C or higher, or does not have a melting point and has a glass transition point of 40°C or higher, as described above.

From the viewpoint of improving the cornering performance and the heat resistance, the hardness Ho of the outer side portion is preferably from 0.84 times to 0.98 times, more preferably from 0.84 times to 0.95 times, still more preferably from 0.84 times to 0.93 times, and particularly preferably from 0.84 times to 0.87 times the hardness Hi of the inner side portion.

In a case in which the inner side resin has a melting point, the melting point of the inner side resin is preferably from 150°C to 240°C, more preferably from 160°C to 240°C, still more preferably from 165°C to 240°C, particularly preferably from 199°C to 240°C, and extremely preferably from 199°C to 208°C. In a case in which the inner side resin does not have a melting point, the inner side resin preferably has a glass transition point of from 40°C to 150°C, more preferably from 65°C to 140°C, and still more preferably from 90°C to 130°C.

The melting point or the glass transition point of a resin (hereinafter, also referred to as "outer side resin") contained as a main component in the resin material constituting the outer side portion is not particularly limited, as long as the relationship between the hardness Ho and the hardness Hi as well as the melting point or the glass transition point of the inner side resin satisfy the above described requirements. In other words, the melting point or the glass transition point of the outer side resin may be a temperature lower than that of the inner side resin. In a case in which the outer side resin has a melting point, the outer side resin preferably has a melting point of, for example, from 150°C to 240°C, more preferably from 160°C to 240°C, and still more preferably from 165°C to 240°C. In a case in which the outer side resin does not have a melting point, the outer side resin preferably has a glass transition point of, for example, from 40°C to 150°C, more preferably from 65°C to 140°C, and still more preferably from 90°C to 130°C.

The hardness of each side portion can be adjusted, for example, by a method of changing the thickness of the side portion, a method of changing the composition of the resin material constituting the side portion, or the like.

Specifically, an increase in the thickness of the side portion results in a higher hardness of the side portion, whereas a decrease in the thickness of the side portion results in a lower hardness of the side portion.

The thickness of the crown portion at a position corresponding to 3/5 L from the tread center line toward each of the outer side in the vehicle width direction and the inner side in the vehicle width direction may be, for example, from 1 mm to 3 mm, and preferably from 1 mm to 2 mm.

In a case in which the tire frame is composed of a plurality of kinds of resin materials, the inner side portion and the outer side portion may be composed of resin materials having different compositions, so that the inner side portion and the outer side portion have different values of hardness. Further, the inner side portion and the outer side portion may be configured to have different values of hardness, by a method of forming respective side portions using resin materials having different compositions, so as to have different values of thickness.

Examples of the method of adjusting the hardness of each side portion by changing the composition of the resin material constituting the side portion include a method of altering the presence or absence, or changing the content, of a component which increases the hardness. In a case in which the resin material contains, as a main component, a thermoplastic elastomer including a hard segment and a soft segment, the hardness of the side portion may be adjusted by changing a content ratio of the hard segment and the soft segment. Specifically, for example, an increase in the ratio of the hard segment results in a higher hardness of the side portion, whereas a decrease in the ratio of the hard segment results in a lower hardness of the side portion.

Further, examples of the method of adjusting the melting point and the glass transition point of the inner side resin and the outer side resin include a method of changing a molecular weight of each resin; and a method of changing a molecular structure of structural units of each resin.

In a case in which the tire frame is composed of a plurality of kinds of resin materials, the portions composed of the respective resin materials are joined together, for example, to obtain the tire frame. Examples of the method of increasing the strength at joining portion(s) between the portions composed of the respective resin materials include: a method in which the respective portions are welded using a resin material for welding or the like; a method in which the respective portions are directly brought into contact with each other and welded, without using a resin material for welding or the like; and a method in which the respective portions are adhered using an adhesive.

The tire frame preferably includes a smaller number of joining portions, from the viewpoint of improving durability of the tire. In particular, from the viewpoint of improving the strength at the joining portion(s), the tire frame is preferably composed of a smaller number of kinds of resin materials. Specifically, the tire frame is preferably composed of not more than three kinds of resin materials, and more preferably composed of not more than two kinds of resin materials.

The present tire includes at least the tire frame, and may further include a member other than the tire frame. Examples of the member other than the tire frame include: a reinforcing member for reinforcing the strength of the tire; a rubber member to be provided on the outer side of the tire frame in the tire radial direction, and an exterior member to be provided at a location of the tire frame which comes into contact with a rim. Among these, it is desirable that the tire includes, as the reinforcing member, a reinforcing cord member which is wound on the outer side of the tire frame in the tire radial direction, along the tire circumferential direction, from the viewpoint of improving the durability of the tire.

The tire frame and members other than the tire frame will now be described respectively.

### < Tire Frame >

The tire frame is composed of a plurality of kinds of resin materials.

In the present specification, the term "resin material" refers to a resin composition containing a resin as a main component. The content of the resin contained in each resin material is preferably 50% by mass or more, more preferably 70% by mass or more, and still more preferably 90% by mass or more.

### (Resins Contained in Resin Materials)

Examples of the resins to be contained in the resin materials include a thermoplastic elastomer, a thermoplastic resin other than the thermoplastic elastomer, and a thermosetting resin. Each resin material may contain one kind of resin, or two or more kinds of resins.

Examples of the thermoplastic resin include a thermoplastic polyamide resin, a thermoplastic polyester resin, a thermoplastic olefin resin, a thermoplastic polyurethane resin, a thermoplastic vinyl chloride resin, and a thermoplastic polystyrene resin.

The term "thermoplastic polyamide resin" is a concept which includes a thermoplastic polyamide elastomer, and the same shall apply hereinafter. The term "thermoplastic polyester resin" is a concept which includes a thermoplastic polyester elastomer, and the same shall apply hereinafter. The term "thermoplastic olefin resin" is a concept which includes a thermoplastic olefin elastomer, and the same shall apply hereinafter. The term "thermoplastic polystyrene resin" is a concept which includes a thermoplastic polystyrene elastomer, and the same shall apply hereinafter. The term "thermoplastic polyurethane resin" is a concept which includes a thermoplastic polyurethane elastomer, and the same shall apply hereinafter.

Examples of the thermoplastic elastomer include, as described above, a thermoplastic resin composed of a copolymer including a hard segment and a soft segment, and a thermoplastic vulcanizate (TPV) which is a mixture of a thermoplastic resin as a main component and a rubber as an additive.

Examples of the thermoplastic resin composed of a copolymer including a hard segment and a soft segment, include a copolymer of a polymer constituting a hard segment which is crystalline and which has a high melting point or a hard segment having a high cohesion, and a polymer constituting a soft segment which is amorphous and which has a low glass transition temperature.

Specifically, the hard segment may be, for example, a segment having a structure which contains a rigid group such as an aromatic group or an alicyclic group in a main skeleton, or a structure which enables the formation of an intermolecular hydrogen bond or an intermolecular packing by π-π interaction. Further, the soft segment may be, for example, a segment having a structure which contains a long chain group (such as a long chain alkylene group or the like) in a main chain, in which molecules have a high degree of rotational freedom, and which has an elasticity.

Specific examples of the thermoplastic elastomer include thermoplastic polyamide elastomers (TPA), thermoplastic polystyrene elastomers (TPS), thermoplastic polyurethane elastomers (TPU), thermoplastic olefin elastomers (TPO), thermoplastic polyester elastomers (TPEE), thermoplastic vulcanizates (TPV), and other thermoplastic elastomers (TPZ), which are defined in JIS K6418.

Examples of the thermosetting resin include thermosetting phenolic resins, thermosetting urea resins, thermosetting melamine resins, and thermosetting epoxy resins.

In view of the elasticity required during the drive, formability in the production, and the like, the resin to be contained in each resin material as a main component is preferably a thermoplastic resin. In particular, a thermoplastic elastomer is more preferred.

Above all, the resin to be contained in each resin material as a main component is preferably a thermoplastic polyamide resin, a thermoplastic polyester resin, or a thermoplastic polyurethane resin. Particularly in a case in which the tire frame is composed of a plurality of kinds of resin materials, it is preferred that all of the resin materials each contains a thermoplastic polyamide resin, a thermoplastic polyester resin, or a thermoplastic polyurethane resin as a main component, from the viewpoint of low loss properties.

In a case in which the tire frame is composed of a plurality of kinds of resin materials, it is preferred that all of the resins to be contained in the plurality of kinds of resin materials as main components are resins of the same type. Resins of the same type exhibit favorable adhesion to one another. Therefore, when all of the resins to be contained in the plurality of kinds of resin materials as main components are resins of the same type, the portions composed of the respective resin materials have a favorable adhesion to one another, leading to an improved durability of the resulting tire.

The resins of the same type as used herein refer to resins having the same structure of bonds between structural units constituting the main chain, of molecular structures characterizing each resin. Specifically, for example, thermoplastic polyamide resins in which the bonds between the structural units constituting the main chain are amide bonds are all resins of the same type. Examples of the case in which all of the resins are resins of the same type include a case in which all of the resins are thermoplastic polyamide resins, a case in which all of the resins are thermoplastic polyester resins, and a case in which all of the resins are thermoplastic polyurethane resins. Further, examples of the case in which all of the resins are resins of the same type also include a case in which all of the resins are identical resins, and a case in which a thermoplastic elastomer(s) and a thermoplastic resin(s) other than the thermoplastic elastomer(s) coexist.

In other words, it is preferred that the tire frame is composed of two or more kinds of resin materials containing resins of the same type as main components, from the viewpoint of improving the durability of the resulting tire.

Further, in a case in which the tire frame is composed of a plurality of kinds of resin materials, an embodiment is also preferred in which all of the resins to be contained in the plurality of kinds of resin materials as main components are each a thermoplastic polyamide resin or a thermoplastic polyurethane resin. As with the case of the resins of the same type, a thermoplastic polyamide resin and a thermoplastic polyurethane resin also exhibit favorable adhesion to one another. Therefore, in a case in which the main components in all of the resin materials are each a thermoplastic polyamide resin or a thermoplastic polyurethane resin, the portions composed of the respective resin materials have a favorable adhesion to one another, leading to an improved durability of the resulting tire.

In other words, from the viewpoint of improving the durability of the resulting tire, it is preferred that the resin materials constituting the tire frame are two or more kinds of resin materials containing resins of the same type as main components, or alternatively, two or more kinds of resin materials including a resin material containing a thermoplastic polyamide resin as a main component, and a resin material containing a thermoplastic polyurethane resin as a main component.

Specific examples of each of the thermoplastic elastomer and the thermoplastic resin other than the thermoplastic elastomer will now be described.

### -Polyamide-based Thermoplastic Elastomer-

The term "polyamide-based thermoplastic elastomer" means a thermoplastic resin material composed of a copolymer that contains a polymer constituting a crystalline and high-melting-point hard segment and a polymer constituting an amorphous and low-glass-transition-temperature soft segment, wherein the polymer constituting the hard segment has an amide bond (-CONH-) in its main chain.

Examples of the polyamide-based thermoplastic elastomer include materials in which at least a polyamide constitutes a crystalline and high-melting-point hard segment and other polymer (e.g., a polyester or a polyether) constitutes an amorphous and low-glass-transition-temperature soft segment. Further, the polyamide-based thermoplastic elastomer may be composed of, in addition to a hard segment and a soft segment, a chain extender such as a dicarboxylic acid.

Specific examples of the polyamide-based thermoplastic elastomer include amide-based thermoplastic elastomers (TPA) that are defined in JIS K6418:2007, and polyamide-based elastomers described in JP-ANo. 2004-346273.

In the polyamide-based thermoplastic elastomer, the polyamide constituting the hard segment is, for example, a polyamide formed from a monomer represented by the following Formula (1) or (2).

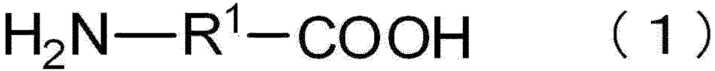

In Formula (1) described above, R¹ represents a hydrocarbon molecular chain having from 2 to 20 carbon atoms (e.g., an alkylene group having from 2 to 20 carbon atoms).

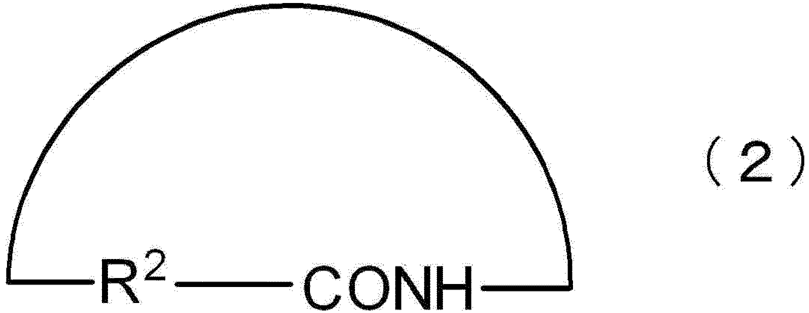

In Formula (2) described above, R² represents a hydrocarbon molecular chain having from 3 to 20 carbon atoms (e.g., an alkylene group having from 3 to 20 carbon atoms).

In Formula (1), R¹ is preferably a hydrocarbon molecular chain having from 3 to 18 carbon atoms (e.g., an alkylene group having from 3 to 18 carbon atoms), more preferably a hydrocarbon molecular chain having from 4 to 15 carbon atoms (e.g., an alkylene group having from 4 to 15 carbon atoms), particularly preferably a hydrocarbon molecular chain having from 10 to 15 carbon atom (e.g., an alkylene group having from 10 to 15 carbon atoms).

In Formula (2), R² is preferably a hydrocarbon molecular chain having from 3 to 18 carbon atoms (e.g., an alkylene group having from 3 to 18 carbon atoms), more preferably a hydrocarbon molecular chain having from 4 to 15 carbon atom (e.g., an alkylene group having from 4 to 15 carbon atoms), particularly preferably a hydrocarbon molecular chain having from 10 to 15 carbon atoms (e.g., an alkylene group having from 10 to 15 carbon atoms).

Examples of the monomer represented by Formula (1) or (2) include *ω-*aminocarboxylic acids and lactams. Examples of the polyamide constituting the hard segment include polycondensates of an *ω*-aminocarboxylic acid and a lactam, and copolycondensates of a diamine and a dicarboxylic acid.

Examples of the *ω*-aminocarboxylic acid include aliphatic *ω*-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Examples of the lactam include aliphatic lactams having from 5 to 20 carbon atoms, such as lauryl lactam, *ε*-caprolactam, undecanelactam, *ω*-enantholactam, and 2-pyrrolidone.

Examples of the diamine include aliphatic diamines having from 2 to 20 carbon atoms, and aromatic diamines having from 6 to 20 carbon atoms. Examples of the aliphatic diamines having from 2 to 20 carbon atoms and the aromatic diamines having from 6 to 20 carbon atoms include ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and meta-xylene diamine.

The dicarboxylic acid can be represented by HOOC-(R³)ₘ-COOH (R³: a hydrocarbon molecular chain having from 3 to 20 carbon atoms, m: 0 or 1), and examples thereof include aliphatic dicarboxylic acids having from 2 to 20 carbon atoms, such as oxalic acid, succinic acid, glutaric acid, adipic acid, pimelic acid, suberic acid, azelaic acid, sebacic acid, and dodecanedioic acid.

As the polyamide constituting the hard segment, a polyamide obtained by ring-opening polycondensation of lauryl lactam, *ε*-caprolactam or undecanelactam can be preferably used.

Examples of the polymer which forms the soft segment include a polyester, and a polyether, and specifically, polyethylene glycol, polypropylene glycol, poly(tetramethylene ether) glycol, and an ABA-type triblock polyether. These may be used singly or in a combination of two or more kinds thereof. Further, a polyetherdiamine obtained by reacting ammonia or the like with the end of a polyether may be also used.

In this regard, the "ABA-type triblock polyether" means a polyether expressed by the following Formula (3).

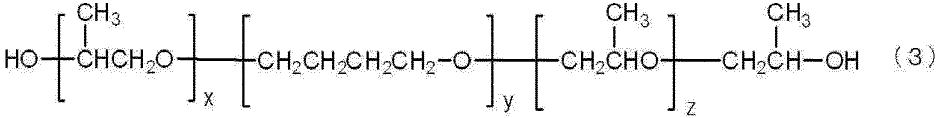

In Formula (3) described above, x and z each represent an integer from 1 to 20. y represents an integer from 4 to 50.

In Formula (3), x and z are each preferably an integer from 1 to 18, more preferably an integer from 1 to 16, especially preferably an integer from 1 to 14, and most preferably an integer froml to 12. Further, in Formula (3), y is preferably an integer from 5 to 45, more preferably an integer from 6 to 40, especially preferably an integer from 7 to 35, and most preferably an integer from 8 to 30.

Examples of a combination of the hard segment and the soft segment include the combinations of the respective hard segment and the respective soft segment described above. Among them, as the combination of the hard segment and the soft segment, a combination of a ring-opening polycondensate of lauryl lactam and poly(ethylene glycol), a combination of a ring-opening polycondensate of lauryl lactam and poly(propylene glycol), a combination of a ring-opening polycondensate of lauryl lactam and poly(tetramethylene ether) glycol, and a combination of a ring-opening polycondensate of lauryl lactam and an ABA-ype triblock polyether are preferable, and a combination of a ring-opening polycondensate of lauryl lactam and an ABA type triblock polyether is especially preferable.

A number average molecular weight of polymer (polyamide) forming a hard segment is preferably from 300 to 15,000 from the viewpoint of melt moldability. A number average molecular weight of polymer forming a soft segment is preferably from 200 to 6,000 from the viewpoint of toughness and low temperature flexibility. A mass ratio (x : y) of the hard segment (x) and the soft segment (y) is preferably 50 : 50 to 90 : 10, and more preferably 50 : 50 to 80 : 20 from the viewpoint of moldability.

The polyamide-based thermoplastic elastomer can be synthesized by copolymerizing the polymer for forming the hard segment and the polymer for forming the soft segment by a publicly known method.

As a commercial product for the polyamide-based thermoplastic elastomer, for example, "UBE STA XPA" series (for example, XPA9063X1, XPA9055X1, XPA9048X2, XPA9048X1, XPA9040X1, and XPA9040X2XPA9044) from UBE Industries, Ltd., "VESTAMID" series (for example, E40-S3, E47-S1, E47-S3, E55-S1, E55-S3, EX9200, and E50-R2), from Daicel-Evonik Ltd., or the like may be used.

### - Polystyrene-based thermoplastic elastomer -

Examples of the polystyrene-based thermoplastic elastomer include a material, in which at least polystyrene forms a hard segment, and another polymer (for example, polybutadiene, polyisoprene, polyethylene, hydrogenate polybutadiene, and hydrogenate polyisoprene) forms an amorphous soft segment with a low glass transition temperature. As the polystyrene that forms the hard segment, for example, one yielded by a publicly known method, such as a radical polymerization method or an ionic polymerization method, is favorably used, and one of specific examples is polystyrene having an anionic living polymer form. Examples of a polymer forming the soft segment include polybutadiene, polyisoprene, and poly(2,3-dimethylbutadiene).

Examples of a combination of the hard segment and the soft segment include the combinations of the respective hard segment and the respective soft segment described above. Among them, as the combination of the hard segment and the soft segment, a combination of polystyrene and polybutadiene, and a combination of polystyrene and polyisoprene is preferable. Further, the soft segment is preferably hydrogenated, so as to suppress unintended crosslinking of a thermoplastic elastomer.

The number average molecular weight of the polymer (polystyrene) forming the hard segment is preferably from 5,000 to 500,000, and more preferably from 10,000 to 200,000.

Meanwhile, the number average molecular weight of the polymer forming the soft segment is preferably from 5,000 to 1,000,000, more preferably from 10,000 to 800,000, and especially preferably from 30,000 to 500,000. Further, the volume ratio (x:y) of a hard segment (x) to a soft segment (y) is preferably from 5:95 to 80:20, and more preferably from 10/90 to 70/30, from a viewpoint of formability.

The polystyrene-based thermoplastic elastomer can be synthesized by copolymerizing the polymer for forming the hard segment and the polymer for forming the soft segment by a publicly known method.

Examples of the polystyrene-based thermoplastic elastomer include a styrene/butadiene-based copolymer [SBS (polystyrene-poly(butylene) block-polystyrene), SEBS (polystyrene-poly(ethylene/butylene) block-polystyrene)], a styrene-isoprene copolymer (polystyrene-polyisoprene block-polystyrene), a styrene/propylene-based copolymer [SEP (polystyrene-(ethylene/propylene) block), SEPS (polystyrene-poly(ethylene/propylene) block-polystyrene), SEEPS (polystyrene-poly(ethylene-ethylene/propylene) block-polystyrene), and SEB (polystyrene (ethylene /butylene) block)].

As a commercial product for the polystyrene-based thermoplastic elastomer, for example, "TUFTEC" series (for example, H1031, H1041, H1043, H1051, H1052, H1053, H1062, H1082, H1141, H1221, and H1272) produced by Asahi Kasei Corporation, and "SEBS" series (8007, 8076, *etc.),* "SEPS" series (2002, 2063, *etc.), etc.* produced by Kuraray Co., Ltd. may be used.

### - Polyurethane-based thermoplastic elastomer -

With respect to the polyurethane-based thermoplastic elastomer, for example, there is a material in which at least polyurethane forms a hard segment with pseudo-crosslinks formed by physical aggregation, and another polymer forms an amorphous soft segment with a low glass transition temperature.

Specific examples of the polyurethane-based thermoplastic elastomer include a polyurethane-based thermoplastic elastomer (TPU) as defined according to JIS K6418: 2007. A polyurethane-based thermoplastic elastomer can be expressed as a copolymer including a soft segment containing a unit structure expressed by the following Formula A, and a hard segment containing a unit structure expressed by the following Formula B.

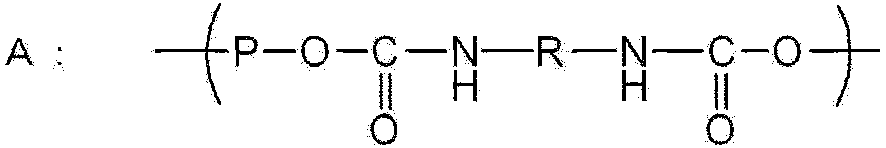

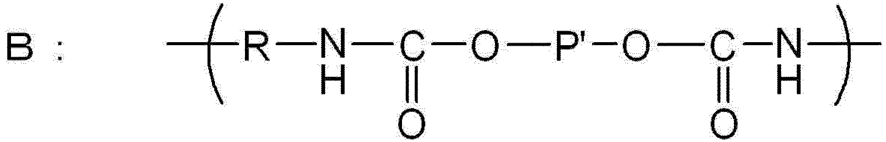

In Formulas described above, P represents a long-chain aliphatic polyether or a long-chain aliphatic polyester. R represents an aliphatic hydrocarbon, an alicyclic hydrocarbon, or an aromatic hydrocarbon. P' represents a short chain aliphatic hydrocarbon, an alicyclic hydrocarbon, or an aromatic hydrocarbon.

As the long-chain aliphatic polyether or the long-chain aliphatic polyester expressed by P in Formula A, for example, that with a molecular weight of from 500 to 5,000 may be used. P is originated from a diol compound containing a long-chain aliphatic polyether or a long-chain aliphatic polyester expressed as P. Examples of such a diol compound include polyethylene glycol, polypropylene glycol, poly(tetramethylene ether) glycol, poly(butylene adipate) diol, poly-s-caprolactone diol, poly(hexamethylene carbonate) diol, and an ABA-type triblock polyether, molecular weight of which being within the above range.

These may be used singly or in a combination of two or more kinds thereof.

In Formulae A and B, R is a partial structure that is introduced using a diisocyanate compound containing the aliphatic, alicyclic or aromatic hydrocarbon represented by R. Example of the aliphatic diisocyanate compound containing the aliphatic hydrocarbon represented by R include 1,2-ethylene diisocyanate, 1,3-propylene diisocyanate, 1,4-butane diisocyanate, and 1,6-hexamethylene diisocyanate.

Examples of the diisocyanate compound containing the alicyclic hydrocarbon represented by R include 1,4-cyclohexane diisocyanate and 4,4-cyclohexane diisocyanate. Further, Examples of the aromatic diisocyanate compound containing the aromatic hydrocarbon represented by R include 4,4'-diphenylmethane diisocyanate and tolylene diisocyanate.

These diisocyanate compounds may be used singly, or two or more kinds thereof may be used in combination.

As the short chain aliphatic hydrocarbon, the alicyclic hydrocarbon, or the aromatic hydrocarbon expressed by P' in Formula B, for example, that having a molecular weight of smaller than 500 may be used. P' is originated from a diol compound containing a short chain aliphatic hydrocarbon, an alicyclic hydrocarbon, or an aromatic hydrocarbon expressed by P'. Examples of the aliphatic diol compound containing a short chain aliphatic hydrocarbon expressed by P' include glycol, and a polyalkylene glycol, and specifically include ethylene glycol, propylene glycol, trimethylene glycol, 1,4-butanediol, 1,3-butanediol, 1,5-pentane diol, 1,6-hexane diol, 1,7-heptane diol, 1,8-octane diol, 1,9-nonane diol, and 1,10-decane diol.

Examples of the alicyclic diol compound containing an alicyclic hydrocarbon expressed by P' include cyclopentane-1,2-diol, cyclohexane-1,2-diol, cyclohexane-1,3-diol, cyclohexane-1,4-diol, and cyclohexane-1,4-dimethanol.

Further, examples of the aromatic diol compound containing an aromatic hydrocarbon expressed by P' include hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenyl sulfone, 4,4'-dihydroxybenzophenone, 4,4'-dihydroxydiphenyl methane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.

These may be used singly or in a combination of two or more kinds thereof.

From the standpoint of the melt-moldability, the number-average molecular weight of the polymer (i.e., polyurethane) constituting the hard segment is preferably from 300 to 1,500. Meanwhile, from the standpoints of the flexibility and thermal stability of the polyurethane-based thermoplastic elastomer, the number-average molecular weight of the polymer constituting the soft segment is preferably from 500 to 20,000, more preferably from 500 to 5,000, particularly preferably from 500 to 3,000. Further, from the standpoint of the moldability, a mass ratio (x:y) of a hard segment (x) and a soft segment (y) is preferably from 15:85 to 90:10, more preferably from 30:70 to 90:10.

The polyurethane-based thermoplastic elastomer can be synthesized by copolymerizing the polymer for forming the hard segment and the polymer for forming the soft segment by a publicly known method. As the polyurethane-based thermoplastic elastomer, for example, a thermoplastic polyurethane described in JP-ANo. H05-331256 can be used.

As the polyurethane-based thermoplastic elastomer, specifically, a combination of a hard segment composed of an aromatic diol and an aromatic diisocyanate and a soft segment composed of a polycarbonate ester is preferable, and more specifically at least one kind selected from the group consisting of a tolylene diisocyanate (TDI) / polyester-based polyol copolymer, a TDI / polyether-based polyol copolymer, a TDI / caprolactone-based polyol copolymer, a TDI / polycarbonate-based polyol copolymer, a 4,4'-diphenyl methane diisocyanate (MDI) / polyester-based polyol copolymer, a MDI / polyether-based polyol copolymer, a MDI / caprolactone-based polyol copolymer, a MDI / polycarbonate-based polyol copolymer, or a MDI+hydroquinone / poly(hexamethylene carbonate) copolymer is preferable, and at least one kind selected from the group consisting of a TDI / polyester-based polyol copolymer, a TDI / polyether-based polyol copolymer, a MDI / polyester polyol copolymer, a MDI / polyether-based polyol copolymer, or a MDI+hydroquinone / poly(hexamethylene carbonate) copolymer is more preferable.

As a commercial product for the polyurethane-based thermoplastic elastomer, for example, "ELASTOLLAN" series (for example, ET680, ET880, ET690, and ET890) produced by BASF SE, "KURAMILON U" series (for example, 2000s, 3000s, 8000s, and 9000s) produced by Kuraray Co., Ltd., and "MIRACTRAN" series (for example, XN-2001, XN-2004, P390RSUP, P480RSUI, P26MRNAT, E490, E590, and P890) produced by Nippon Miractran Co., Ltd. may be used.

### - Olefin-based thermoplastic elastomer -

Examples of the olefin-based thermoplastic elastomer include a material in which at least a polyolefin forms a crystalline hard segment with a high melting temperature, and another polymer (for example, polyolefin, another polyolefin, and polyvinyl compound) forms an amorphous soft segment with a low glass transition temperature. Examples of the polyolefin forming a hard segment include polyethylene, polypropylene, isotactic polypropylene, and polybutene.

Examples of the olefin-based thermoplastic elastomer include an olefin-α-olefin random copolymer and an olefin block copolymer, and specifically include a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methylpentene copolymer, an ethylene-1-butene copolymer, a 1-butene-1-hexene copolymer, 1-butene-4-methylpentene, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene- butyl methacrylate copolymer, a propylene-methyl acrylate copolymer, a propylene-ethyl acrylate copolymer, a propylene-butyl acrylate copolymer, an ethylene-vinyl acetate copolymer, and a propylene-vinyl acetate copolymer.

Among them, as the olefin-based thermoplastic elastomer, at least one kind selected from the group consisting of a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methylpentene copolymer, an ethylene-1-butene copolymer, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer, or a propylene-vinyl acetate copolymer is preferable, and at least one kind selected from the group consisting of an ethylene-propylene copolymer, a propylene-1-butene copolymer, an ethylene-1-butene copolymer, an ethylene-methyl methacrylate copolymer, an ethylene-methyl acrylate copolymer, an ethylene-ethyl acrylate copolymer, or an ethylene-butyl acrylate copolymer is more preferable.

A combination of two or more kinds of the olefin-based resins, such as ethylene and propylene may be used. A content of an olefin-based resin in an olefin-based thermoplastic elastomer is preferably from 50% by mass to 100% by mass.

The number average molecular weight of the olefin-based thermoplastic elastomer is preferably from 5,000 to 10,000,000. When the number average molecular weight of the olefin-based thermoplastic elastomer is from 5,000 to 10,000,000, the mechanical properties of a thermoplastic resin material can be adequate, and processability thereof is also superior. From a similar viewpoint, the number average molecular weight of an olefin-based thermoplastic elastomer is more preferably from 7,000 to 1,000,000, and especially preferably from 10,000 to 1,000,000. In this case, the mechanical properties and processability of the thermoplastic resin material can be improved. Meanwhile, the number average molecular weight of the polymer forming the soft segment is preferably from 200 to 6,000 from viewpoints of toughness and low temperature flexibility. Further, the mass ratio (x:y) of a hard segment (x) to a soft segment (y) is preferably from 50:50 to 95:15, and more preferably from 50:50 to 90:10, from a viewpoint of formability.

An olefin-based thermoplastic elastomer can be synthesized through copolymerization by a publicly known method.

As an olefin-based thermoplastic elastomer, a thermoplastic elastomer modified with an acid may be used.

An "olefin-based thermoplastic elastomer modified with an acid" means an olefin-based thermoplastic elastomer bound with an unsaturated compound having an acidic group, such as a carboxylic acid group, a sulfuric acid group, or a phosphoric acid group.

For the binding of the unsaturated compound having an acidic group, such as a carboxylic acid group, a sulfuric acid group, or a phosphoric acid group, to the olefin-based thermoplastic elastomer, for example, an unsaturated bond moiety of an unsaturated carboxylic acid (generally maleic anhydride) is bound (e.g., grafted) as the unsaturated compound having an acidic group to the olefin-based thermoplastic elastomer.

From the standpoint of inhibiting deterioration of the olefin-based thermoplastic elastomer, the unsaturated compound having an acidic group is preferably an unsaturated compound having a carboxylic acid group, which is a weak acid group. Examples of the unsaturated compound having a carboxylic acid group include acrylic acid, methacrylic acid, itaconic acid, crotonic acid, isocrotonic acid, and maleic acid.

As a commercial product for the olefin-based thermoplastic elastomer, for example, "TAFMER" series (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680) produced by Mitsui Chemicals, Inc., "NUCREL" series (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C), and "ELVALOYAC" series (for example, 1125AC, 1209AC, 1218AC, 1609AC, 1820AC, 1913AC, 2112AC, 2116AC, 2615AC, 2715AC, 3117AC, 3427AC, and 3717AC), produced by Dupont-Mitsui Polychemicals Co., Ltd., "ACRYFT" series, "EVATATE" series, *etc.* from Sumitomo Chemical Co., Ltd., "ULTRATHENE" series, *etc.* produced by Tosoh Corporation, "PRIME TPO" series (for example, E-2900H, F-3900H, E-2900, F-3900, J-5900, E-2910, F-3910, J-5910, E-2710, F-3710, J-5910, E-2740, F-3740, R110MP, R110E, T310E, and M142E) produced by Prime Polymer Co., Ltd., *etc.* may be used.

### - Polyester-based thermoplastic elastomer -

Examples of the polyester-based thermoplastic elastomer include a material in which at least a polyester forms a crystalline hard segment with a high melting temperature, and another polymer (for example, polyester, or polyether) forms an amorphous soft segment with a low glass transition temperature.

As the polyester constituting the hard segment, an aromatic polyester can be used. The aromatic polyester can be formed from, for example, an aromatic dicarboxylic acid or an ester-forming derivative thereof, and an aliphatic diol. The aromatic polyester is preferably a polybutylene terephthalate derived from 1,4-butanediol and at least one of terephthalic acid or dimethyl terephthalate. Alternatively, the aromatic polyester may be, for example, a polyester derived from a dicarboxylic acid component (e.g., isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative of these dicarboxylic acids) and a diol having a molecular weight of 300 or less (e.g., an aliphatic diol, such as ethylene glycol, trimethylene glycol, pentamethylene glycol, hexamethylene glycol, neopentyl glycol, or decamethylene glycol; an alicyclic diol, such as 1,4-cyclohexane dimethanol or tricyclodecane dimethylol; and an aromatic diol, such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl), or a copolyester obtained by using two or more of the above-described dicarboxylic acid components and diol components. It is also possible to copolymerize, for example, a polyfunctional carboxylic acid component, a polyfunctional oxyacid component or a polyfunctional hydroxy component, which has three or more functional groups, in a range of 5% by mole or less.

Examples of the polyester constituting the hard segment include polyethylene terephthalate, polybutylene terephthalate, polymethylene terephthalate, polyethylene naphthalate, and polybutylene naphthalate, among which polybutylene terephthalate is preferable.

Examples of the polymer forming the soft segment include an aliphatic polyester and an aliphatic polyether.

Examples of the aliphatic polyether include poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide addition polymer of poly(propylene oxide) glycol, and a copolymer of ethylene oxide and tetrahydrofuran.

Examples of the aliphatic polyester include poly(ε-caprolactone), polyenantholactone, polycaprylolactone, poly(butylene adipate), and poly(ethylene adipate).

Among the aliphatic polyethers and the aliphatic polyesters, as the polymer forming the soft segment, poly(tetramethylene oxide) glycol, an ethylene oxide addition product of poly(propylene oxide) glycol, poly(ε-caprolactone), poly(butylene adipate), and poly(ethylene adipate), and the like are preferable from a viewpoint of the elasticity characteristic of an obtained polyester block copolymer.

The number average molecular weight of the polymer forming the soft segment is preferably from 300 to 6,000 from viewpoints of toughness and low temperature flexibility. Further, the mass ratio (x:y) of a hard segment (x) to a soft segment (y) is preferably from 99:1 to 20:80 from a viewpoint of formability, and more preferably from 98:2 to 30:70.

Examples of a combination of the hard segment and the soft segment include the combinations of the respective hard segment and the respective soft segment described above. Among them, as the combination of the hard segment and the soft segment a combination of poly(butylene terephthalate) as a hard segment and an aliphatic polyether as a soft segment is preferable, and a combination of poly(butylene terephthalate) as a hard segment and poly(ethylene oxide) glycol as a soft segment is more preferable.

As a commercial product for the polyester-based thermoplastic elastomer, for example, "HYTREL" series (for example, 3046, 5557, 6347, 4047, and 4767) from Du Pont-Toray Co., Ltd., and "PELPRENE" series (for example, P30B, P40B, P40H, P55B, P70B, P150B, P280B, P450B, P150M, S1001, S2001, S5001, S6001, and S9001) produced by Toyobo Co., Ltd. may be used.

The polyester-based thermoplastic elastomer can be synthesized by copolymerizing the polymer for forming the hard segment and the polymer for forming the soft segment by a publicly known method.

### - Thermoplastic Polyamide Resin Other than Thermoplastic Elastomer -

Examples of the thermoplastic polyamide resin other than the thermoplastic elastomer include the polyamide constituting the hard segment of the thermoplastic polyamide elastomer.

Specific examples of the thermoplastic polyamide resin other than the thermoplastic elastomer include: a polyamide (amide 6) obtained by ring-opening polycondensation of ε-caprolactam; a polyamide (amide 11) obtained by ring-opening polycondensation of undecane lactam; a polyamide (amide12) obtained by ring-opening polycondensation of lauryl lactam; a polyamide (amide 66) obtained by polycondensation of a diamine and a dibasic acid; and a polyamide (amide MX) containing m-xylene diamine as a structural unit.

The amide 6 can be represented, for example, by {CO-(CH₂)₅-NH}ₙ. The amide 11 can be represented, for example, by {CO-(CH₂)₁₀-NH}ₙ. The amide 12 can be represented, for example, by {CO-(CH₂)₁₁-NH}ₙ. The amide 66 can be represented, for example, by {CO(CH₂)₄CONH(CH₂)₆NH}ₙ. The amide MX can be represented, for example, by the following Structural Formula (A-1). In Formula (A-1), n represents the number of repeating units.

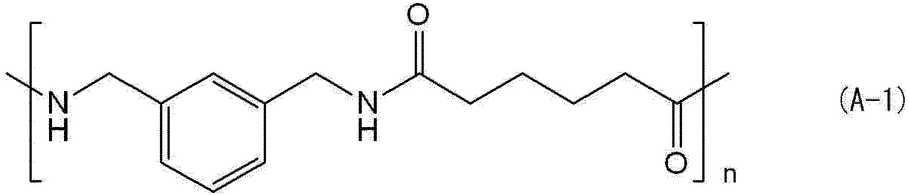

### - Thermoplastic Polyester Resin Other than Thermoplastic Elastomer -

Examples of the thermoplastic polyester resin other than the thermoplastic elastomer include the polyester constituting the hard segment of the thermoplastic polyester elastomer.

Specific examples of the thermoplastic polyester resin other than the thermoplastic elastomer include: aliphatic polyesters such as polylactic acid, polyhydroxy-3-butylbutyric acid, polyhydroxy-3-hexylbutyric acid, poly(ε-caprolactone), polyenantholactone, polycaprolactone, polybutylene adipate and polyethylene adipate; and aromatic polyesters such as polyethylene terephthalate, polybutylene terephthalate, polyethylene naphthalate, and polybutylene naphthalate.

### - Thermoplastic Olefin Resin Other than Thermoplastic Elastomer -

Examples of the thermoplastic olefin resin other than the thermoplastic elastomer include the polyolefin constituting the hard segment of the thermoplastic olefin elastomer.

Specific examples of the thermoplastic olefin resin other than the thermoplastic elastomer include a thermoplastic polyethylene resin, a thermoplastic polypropylene resin, and a thermoplastic polybutadiene resin.

Specific examples of the thermoplastic polypropylene resin include a propylene homopolymer, a propylene-α-olefin random copolymer, and a propylene-α-olefin block copolymer. Examples of the α-olefin include α-olefins having from about 3 to 20 carbon atoms, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, and 1-eicosene.

### (Components Other than Resins Contained in Resin Materials)

The resin materials may optionally contain other components other than the resins. Examples of the other components include rubbers, various kinds of fillers (such as silica, calcium carbonate, and clay), and various kinds of additives such as anti-aging agents, oils, plasticizers, colorants, weather resistant agents, and reinforcing materials.

The content of the additive(s) in each resin material is/are not particularly limited, and can be adjusted as long as the effect of the present invention is not impaired.

### - Properties of Resin Material-

The melting point of the resin material is, for example, preferably from 100°C to about 350°C and, from the standpoints of durability and productivity of the tire, it is preferably from 100°C to about 250°C, more preferably from 120°C to 250°C.

The tensile modulus of elasticity, which is defined in JIS K7113:1995, of the resin material is preferably from 50 MPa to 1,000 MPa, more preferably from 50 MPa to 800 MPa, particularly preferably from 50 MPa to 700 MPa. In a case in which the tensile modulus of elasticity of the resin material is from 50 MPa to 1,000 MPa, the tire can be efficiently fitted to a rim while maintaining the shape of the tire frame.

The tensile strength, which is defined in JIS K7113 (1995), of the resin material is usually from about 15 MPa to about 70 MPa, preferably from 17 MPa to 60 MPa, more preferably from 20 MPa to 55 MPa.

The tensile strength at yield, which is defined in JIS K7113 (1995), of the resin material is preferably 5 MPa or greater, more preferably from 5 MPa to 20 MPa, particularly preferably from 5 MPa to 17 MPa. In a case in which the tensile strength at yield of the resin material is 5 MPa or greater, the tire can endure deformation caused by a load applied to the tire during traveling or the like.

The tensile elongation at yield, which is defined in JIS K7113 (1995), of the resin material (i.e., tire frame) itself is preferably 10% or greater, more preferably from 10% to 70%, particularly preferably from 15% to 60%. In a case in which the tensile elongation at yield of the resin material is 10% or greater, a large elastic region is provided, so that favorable rim fittability can be attained.

The tensile elongation at break, which is defined in JIS K7113 (1995), of the resin material is preferably 50% or greater, more preferably 100% or greater, particularly preferably 150% or greater, most preferably 200% or greater. In a case in which the tensile elongation at break of the resin material is 50% or greater, favorable rim fittability can be attained, and the tire can be made unlikely to rupture at collision.

The deflection temperature under load (under a load of 0.45 MPa), which is defined in ISO75-2 or ASTM D648, of the resin material is preferably 50°C or higher, more preferably from 50°C to 150°C, particularly preferably from 50°C to 130°C. With the deflection temperature under load of the resin material being 50°C or higher, deformation of the tire frame can be inhibited even when vulcanization is performed in the production of the tire.

### (Properties of Tire Frame)

The hardness Ho of the outer side portion may be, for example, from 30 degrees to 80 degrees, more preferably from 35 degrees to 75 degrees, and still more preferably from 40 degrees to 70 degrees.

The hardness Hi of the inner side portion may be, for example, from 30 degrees to 80 degrees, more preferably from 35 degrees to 75 degrees, and still more preferably from 40 degrees to 70 degrees.

In the present tire frame, the hardness Ho of the outer side portion is lower than the hardness Hi of the inner side portion. In addition, it is also preferred that the hardness of the crown portion on the outer side in the vehicle width direction is lower than the hardness of the crown portion on the inner side in the vehicle width direction. Specifically, when the distance between the tread end on the inner side in the vehicle width direction and the tread end on the outer side in the vehicle width direction is defined as "L", an Asker D hardness Ho' at a position corresponding to 1/3 L from the tread center line toward the outer side in the vehicle width direction, is preferably lower than an Asker D hardness Hi' at a position corresponding to 1/3 L from the tread center line toward the inner side in the vehicle width direction. Further, the hardness Ho' is preferably 0.84 times or more but less than 1.00 times, more preferably from 0.84 times to 0.95 times, particularly preferably from 0.84 times to 0.93 times, and further particularly preferably from 0.84 times to 0.87 times the hardness Hi'.

Further, in the tire frame, the Asker D hardnesses at positions corresponding to 3/5 L from the tread center line toward the outer side in the vehicle width direction and the inner side in the vehicle width direction, respectively, satisfy the above described relationship. In addition, it is also preferred that the Asker D hardnesses at positions corresponding to 1/5 L from the tread center line toward the outer side in the vehicle width direction and the inner side in the vehicle width direction, respectively, satisfy the same relationship. In other words, an Asker D hardness Ho" at a position corresponding to 1/5 L from the tread center line toward the outer side in the vehicle width direction is preferably lower than an Asker D hardness Hi" at a position corresponding to 1/5 L from the tread center line toward the inner side in the vehicle width direction. The hardness Ho" is more preferably 0.84 times or more but less than 1.00 times, still more preferably from 0.84 times to 0.95 times, particularly preferably from 0.84 times to 0.93 times, and further particularly preferably from 0.84 times to 0.87 times the hardness Hi".

In the tire frame, the outer side portion preferably has a density which is from 0.90 times to 1.10 times, and more preferably from 0.95 times to 1.05 times the density of the inner side portion.

When the ratio of the density of the outer side portion and the density of the inner side portion is close to 1, the weight of the resulting tire is less likely to be biased toward the outer side in the vehicle width direction or the inner side in the vehicle width direction, and the balance of the load applied to the tire will be improved, thereby leading to a favorable grounding shape of the tire.

The density of each of the outer side portion and the inner side portion is preferably from 0.80 g/cm³ to 1.35 g/cm³, and more preferably from 1.00 g/cm³ to 1.20 g/cm³.

The density of each of the side portions as used herein is determined by cutting out a resin material piece (having a size of, for example, 5.0 mm × 5.0 mm × 1.0 mm) from a position corresponding to 3/5 L from the tread center line toward each of the outer side in the vehicle width direction and the inner side in the vehicle width direction, and measuring the density of each piece by an Archimedes method.

### < Reinforcing Member >

The reinforcing member may be, for example, a reinforcing cord member in the form of a cord.

Examples of the reinforcing cord member include a metal member in the form of a cord, which is used in a conventional rubber tire. Examples of the metal member in the form of a cord include a monofilament (single fiber) of a metal fiber, and a multifilament (twisted wire) such as a steel cord obtained by twisting steel fibers. From the viewpoint of further improving the durability of the resulting tire, a multifilament is preferred.

The cross-sectional shape (for example, a circle, an ellipsoid, a polygon, or the like), the size (diameter), and the like of the metal member are not particularly limited, and those suitable for a desired tire can be selected and used as appropriate.

The metal member preferably has a thickness of from 0.2 mm to 2 mm, and more preferably from 0.8 mm to 1.6 mm, in order to allow the resulting tire to have both an internal pressure resistance and a reduced weight. The thickness of the metal member is defined as a number average value of the thicknesses measured at randomly selected five locations.

The reinforcing cord member preferably has a thickness of from 0.2 mm to 2 mm, and more preferably from 0.8 mm to 1.6 mm. The thickness of the reinforcing cord member is defined as the number average value of the thicknesses measured at randomly selected five locations. In the measurement the thickness, a maximum diameter of the reinforcing cord member in a cross section thereof (namely, the distance between randomly selected two points on a contour line of the reinforcing cord member in the cross section, when the distance between the two points is maximized) is taken as each measured value of the thickness.

The metal member usually has a tensile elastic modulus of from about 100,000 MPa to 300,000 MPa, preferably from 120,000 MPa to 270,000 MPa, and more preferably from 150,000 MPa to 250,000 MPa. The tensile elastic modulus of the metal member is determined by drawing a stress-distortion curve, using a tensile tester with a ZWICK-type chuck, and calculating from the slope of the curve.

The metal member itself has an elongation at break (tensile elongation at break) of usually from about 0.1% to 15%, preferably from 1% to 15%, and more preferably from 1% to 10%. The tensile elongation at break of the metal member can be determined by drawing a stress-distortion curve, using a tensile tester with a ZWICK-type chuck, and calculating from the distortion.

The reinforcing cord member may be wound on the outer side of the tire frame in the tire radial direction, along the tire circumferential direction, or may be arranged so as to form an angle with respect to the tire circumferential direction. However, the reinforcing cord member is preferably wound along the tire circumferential direction, from the viewpoint of ease of production and the durability. Alternatively, a plurality of reinforcing cord members may be arranged such that the reinforcing cord members are arranged so as to be layered in a tire thickness direction. In this case, the plurality of reinforcing cord members layered in the tire thickness direction, may be arranged in a state near parallel to each other, or may be arranged so as to intersect with each other.

The reinforcing cord member may be coated with a coating resin material.

Examples of the coating resin material include the same resin materials as those constituting the tire frame. From the viewpoint of improving the durability, the coating resin preferably contains, as a main component, a resin of the same type as the main components of the resin materials constituting the tire frame.

The elastic modulus (tensile elastic modulus defined in JIS K7113: 1995) of the coating resin material is preferably set within the range of from 0.1 times to 10 times the elastic moduli of the resin materials constituting the tire frame. When the elastic modulus of the coating resin material is 10 times or less the elastic moduli of the resin materials constituting the tire frame, the crown portion can be prevented from being too hard, thereby facilitating the assembly of the tire to the rim. Further, when the elastic modulus of the coating resin material is 0.1 times or more the elastic moduli of the resin materials constituting the tire frame, the coating resin material can be prevented from being too soft, thereby improving the cornering performance.

It is preferred that 20% or more of the surface of the reinforcing cord member is coated with the coating resin material, and more preferably 50% or more of the surface thereof is coated with the coating resin material, from the viewpoint of increasing pull out resistance (property of not easily pulled out).

The thickness of a layer (hereinafter, also referred to as "coating resin layer") formed by coating with the coating resin material is not particularly limited. However, the coating resin layer preferably has a thickness of from 10 µm to 1,000 µm, and more preferably from 50 µm to 700 µm, from the viewpoint of improving the durability. The thickness of the coating resin layer is measured on an SEM image of a cross section of the reinforcing cord member coated with the coating resin material, and is defined as the measured value of the portion having a smallest thickness.

The reinforcing cord member may be coated with the coating resin material, for example, via another layer, such as an adhesive layer (a layer formed using an adhesive).

Examples of the type of the adhesive to be used for forming the adhesive layer include a hot-melt adhesive, and a solvent-based adhesive. The adhesive to be used for forming the adhesive layer may be used singly, or in combination of two or more kinds thereof.

In a case in which the adhesive to be used for forming the adhesive layer is a non-reactive adhesive, the resulting adhesive layer is a layer containing the non-reactive adhesive, and in a case in which the adhesive to be used for forming the adhesive layer is a reactive adhesive, the resulting adhesive layer is a layer containing a reaction product of the reactive adhesive.

The average thickness of the adhesive layer is not particularly limited. However, the adhesive layer preferably has an average thickness of from 5 µm to 500 µm, more preferably from 20 µm to 150 µm, and still more preferably from 20 µm to 100 µm, from the viewpoint of improving the riding comfort during the drive and the durability of the resulting tire.

The adhesive layer may contain any of other components other than the adhesive. Examples of the other components include radical scavengers, rubbers, elastomers, thermoplastic resins, various kinds of fillers (such as silica, calcium carbonate, and clay), anti-aging agents, oils, plasticizers, color developers, and weather resistant agents.

### < Rubber Member >

The rubber member is provided, for example, on the outer side of the tire frame in the tire radial direction.

In a case in which the reinforcing cord member is wound on the outer side of the tire frame in the tire radial direction, the rubber member is provided on the outer side of the tire frame in the tire radial direction, via the reinforcing cord member.

The rubber member is not particularly limited, as long as the member contains a rubber. For example, it is possible to use the same kind of rubber as a tread rubber to be used in a conventional pneumatic tire made of rubber.

Further, grooves for drainage extending in the tire circumferential direction, for example, may be formed on an outer peripheral surface of the rubber member in the tire radial direction.

### [First Embodiment]

A first embodiment of the present invention will now be described with reference to drawings. The first embodiment is an embodiment in which the reinforcing cord member coated with the coating resin material is wound on the outer side of the tire frame in the tire radial direction, along the tire circumferential direction.

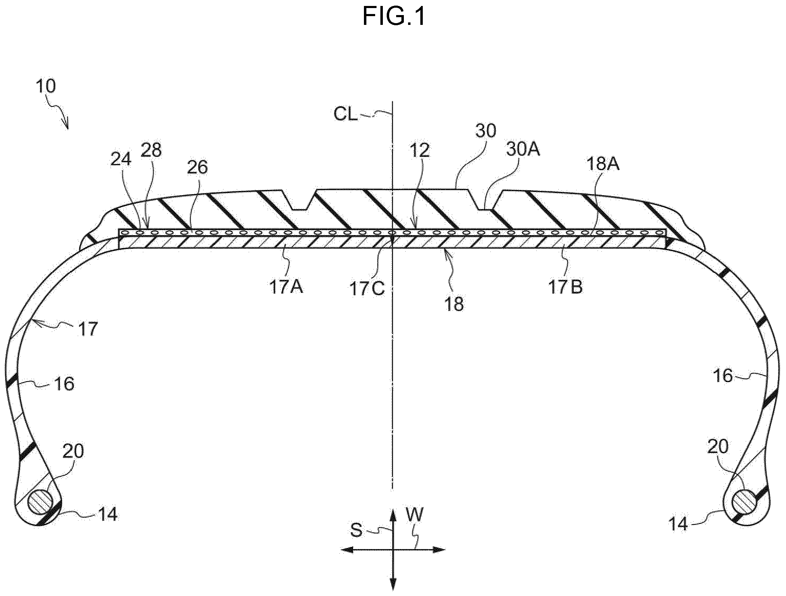

FIG. 1 is a cross-sectional view showing the configuration of a tire according to the first embodiment, taken along the tire width direction.

In FIG. 1, an arrow W indicates a direction (hereinafter, also referred to as "tire width direction") which is parallel to an axis of rotation of the tire, and an arrow S indicates a direction (hereinafter, also referred to as "tire radial direction") which passes through the axis of rotation of the tire and which is orthogonal to the tire width direction. Further, a long-dashed-short-dashed line CL indicates the center line of the tire (hereinafter, also referred to as "tire equatorial plane").

As shown in FIG. 1, a tire 10 according to the first embodiment includes: a tire casing 17, which is one example of the annular tire frame composed of resin materials; a belt layer 12 including, as reinforcing members, reinforcing cords 24, which are one example of the reinforcing cord member; a tread 30, which is one example of the rubber member. The reinforcing cords 24 are coated with a coating resin 26. In other words, the belt layer 12 includes a plurality of the reinforcing cords 24 coated with the coating resin 26.

The tire casing 17 includes: a pair of bead portions 14 provided spaced apart in the tire width direction; a pair of side portions 16 each extending from each of the pair of bead portions 14 toward the outer side in the tire radial direction; and a crown portion 18 connecting the pair of side portions 16. The bead portions 14 are portions which come into contact with a rim (not shown). Further, the side portions 16 form lateral portions of the tire 10, and gently curve from the respective bead portions 14 toward the crown portion 18 so as to protrude outward in the tire width direction.

The crown portion 18 is a portion connecting an outer end of one side portion 16 in the tire radial direction with an outer end of the other side portion 16 in the tire radial direction, and supports the tread 30 to be provided on the outer side in the tire radial direction.

In the present embodiment, the crown portion 18 is configured to have a substantially constant thickness. An outer peripheral surface 18A of the crown portion 18 of the tire casing 17 may be formed so as to be flat in a cross section in the tire width direction, or alternatively, may be formed in a curved shape protruding outward in the tire radial direction. It is noted that the outer peripheral surface 18A of the crown portion 18 in the present embodiment is an outer periphery of the tire casing 17 on which the belt layer 12 is to be provided.

In the present embodiment, the tire casing 17 is composed of a half body 17A and a half body 17B, each including one bead portion 14, one side portion 16, and one half-width crown portion 18. The tire casing 17 is formed by arranging the half body 17A and the half body 17B so as to face with each other, and joining end portions of the respective half-width crown portions 18 with each other, at the tire equatorial plane CL. The end portions are joined together using, for example, a resin material for welding 17C.

Annular bead cores 20 extending in the tire circumferential direction are each embedded in each of the bead portions 14. The bead cores 20 are each composed of a bead cord (not shown). The bead cord is composed of a metal cord such as a steel cord, an organic fiber cord, a resin-coated organic fiber cord, or a hard resin. The bead cores 20 need not be provided, when it is ensured that the bead portions 14 have a sufficient rigidity.

In the present embodiment, the half body 17A and the half body 17B are composed of resin materials having different compositions. The hardness Ho of the side portion 16 of the half body 17A, which is to be located on the outer side in the vehicle width direction when the tire 10 is mounted on a vehicle, is lower than the hardness Hi of the side portion 16 of the half body 17B, which is to be located on the inner side in the vehicle width direction when the tire 10 is mounted on the vehicle. A resin contained as a main component in the resin material constituting the half body 17B, which is to be located on the inner side in the vehicle width direction, has a melting point of 140°C or higher, or does not have a melting point and has a glass transition point of 40°C or higher.

The tire casing 17 may be formed as an integrally molded article, or alternatively, the tire casing 17 may be formed by separately producing three or more resin members, and then joining these resin members. For example, the tire casing 17 may be formed by separately producing respective portions (for example, separately producing the bead portions 14, side portions 16, and the crown portion 18), and then joining these portions.

The belt layer 12 is provided on the outer periphery of the tire casing 17. The outer periphery of the tire casing 17 in the present embodiment is the outer peripheral surface 18A the crown portion 18.

The belt layer 12 is formed by: helically winding a resin coated cord 28 on the outer periphery of the tire casing 17 in the tire circumferential direction; and then joining the resin coated cord 28 to the tire casing 17, as well as joining the portions of the wound resin coated cord 28 which are adjacent with each other in the tire width direction. The resin coated cord 28 is formed by coating the reinforcing cords 24 with the coating resin 26.

Further, an inner peripheral surface of the resin coated cord 28 in the tire radial direction is joined to the outer peripheral surface 18A of the crown portion 18 of the tire casing 17.

The resin coated cord 28 may include a single piece of the reinforcing cord 24 within the coating resin 26, or alternatively, may include a plurality of pieces of the reinforcing cords 24 within the coating resin 26.

Further, the resin coated cord 28 may have a rectangular cross-sectional shape, or an arc-shaped cross-sectional shape.

The belt layer 12 shown in FIG. 1 has a configuration in which the layer of the resin coated cord 28 is a monolayer, and the reinforcing cords 24 are arranged in a row in the tire width direction. However, the configuration thereof is not limited thereto. The belt layer 12 may also be a belt layer having a layered structure obtained by helically winding the resin coated cord 28 in the tire circumferential direction to form a layer, and then further winding the resin coated cord 28 on the outer peripheral surface of the thus formed layer.

The thickness of the belt layer 12 may be, for example, within the range of from 0.2 mm to 1.2 mm, but not particularly limited thereto. From the viewpoint of improving durability of the resulting tire, the thickness of the belt layer 12 is preferably within the range of from 0.3 mm to 1.0 mm, and more preferably within the range of from 0.3 mm to 0.8 mm.

As shown in FIG. 1, the tread 30 is provided on the outer side of the belt layer 12 in the tire radial direction. The tread 30 is layered on top of the belt layer 12 on the tire casing 17, and then vulcanized and adhered to the belt layer 12.

The tread 30 is formed of a material containing a rubber having a wear resistance more excellent than that of the resin materials constituting the tire casing 17, and it is possible to use the same kind of rubber as a tread rubber to be used in a conventional pneumatic tire made of rubber.

Further, grooves 30A for drainage extending in the tire circumferential direction are formed on the outer peripheral surface of the tread 30 in the tire radial direction. In the present embodiment, two rows of grooves 30A are formed. However, the configuration of the grooves is not limited thereto, and a larger number of grooves 30A may be formed. A known tread pattern can be used for the tread 30.

### (Method of Producing Tire)

The method of producing the tire 10 according to the present embodiment will now be described. First, the half body 17A and the half body 17B, each containing the bead core 20, are formed separately by injection molding, using respective resin materials.

In the tire 10, the half body 17A and the half body 17B are formed by injection molding. However, the formation method thereof is not limited thereto, and the half body 17A and the half body 17B may be formed, for example, by vacuum molding, pressure forming, melt casting, or the like.

Subsequently, a pair of the half body 17A and the half body 17B are arranged so as to face each other; the end portions of the portions of the half bodies to be formed into the crown portion 18 are butted with each other; the resin material for welding 17C in a molten state is applied to the butted portions; and the pair of the half body 17A and the half body 17B are joined together. In this manner, the annular tire casing 17 is formed.

Alternatively, the tire casing 17 may be formed without using the resin material for welding 17C, for example, by pressing the half body 17A and the half body 17B against each other, while heating a circumference of the joining portion between the half bodies to a temperature equal to or higher than the melting points of the resin materials, so that the half body 17A and the half body 17B are joined together by fusion bonding.

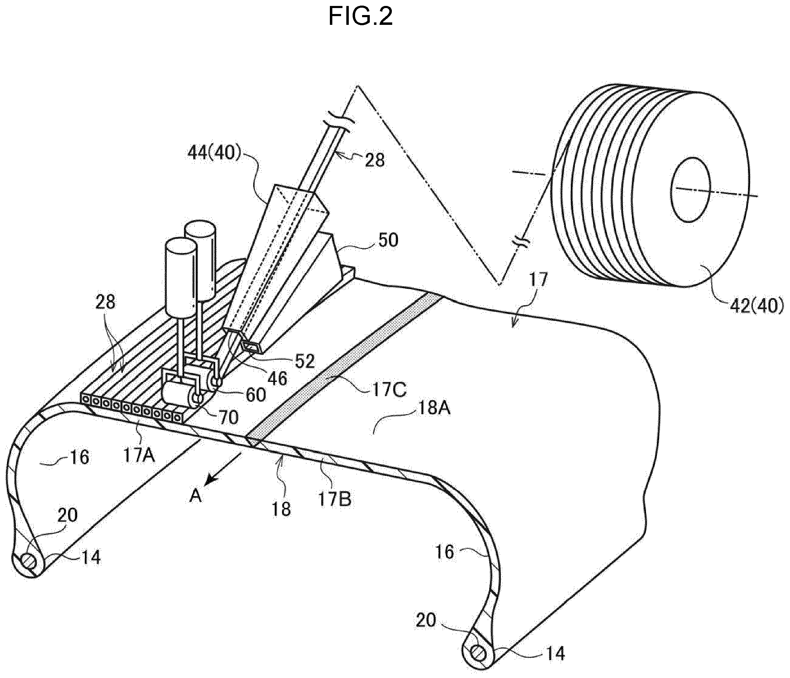

Next, a description will be given of the step of winding the resin coated cord 28 on the outer periphery of the tire casing 17. First, the tire casing 17 is attached to a tire support apparatus (not shown) which rotatably supports the tire casing 17. Subsequently, as shown in FIG. 2, a cord supply apparatus 40, a heating apparatus 50, a pressing roller 60 as a pressing device, and a cooling roller 70 as a cooling device are moved to the vicinity of the outer periphery the tire casing 17.

The cord supply apparatus 40 includes a reel 42 on which the resin coated cord 28 has been wound, and a guide member 44. The guide member 44 is a member for guiding the resin coated cord 28 unwound from the reel 42 to the outer periphery of the tire casing 17 (namely, the outer peripheral surface 18A of the crown portion 18). The guide member 44 is formed in a cylindrical shape, so as to allow the resin coated cord 28 to pass therethrough. The resin coated cord 28 is fed from a mouth portion 46 of the guide member 44, toward the outer peripheral surface 18A of the crown portion 18.

The heating apparatus 50 blows hot air to the thermoplastic resins, so as to heat and melt the portions of the resins to which hot air is blown. The hot air is blown to the inner peripheral surface of the resin coated cord 28 to be pressed onto the outer peripheral surface 18A of the crown portion 18, and to the portion of the outer peripheral surface 18A of the crown portion 18 on which the resin coated cord 28 is to be provided. When the resin coated cord 28 has been wound more than once around the outer peripheral surface 18A of the crown portion 18, and the resin coated cord 28 pressed on the outer peripheral surface 18A is already present, hot air is also blown to the side surface of the already wound resin coated cord.

The heating apparatus 50 is configured to blow out air heated with a heating wire (not shown) by a fan (not shown) from an air outlet 52. The configuration of the heating apparatus 50 is not limited to the configuration described above, and the heating apparatus 50 may have any configuration as long as the thermoplastic resins can be melted. For example, a hot iron may be brought into contact with portions to be melted so as to heat melt the contact portions. Alternatively, the portions to be melted may be heat-melted by radiant heat, or may be heat-melted by irradiation of infrared rays.

In FIG. 2, the cooling roller 70 is provided on a downstream side of the pressing roller 60 in the direction of rotation of the tire casing 17 (the direction indicated by an arrow A). The cooling roller 70 cools the resin coated cord 28, and the side of the crown portion 18 provided with the resin coated cord 28, via the resin coated cord 28, while pressing the resin coated cord 28 onto the outer periphery of the tire casing 17 (namely, the outer peripheral surface 18A of the crown portion 18). The cooling roller 70 is configured such that a pressing force of the roller can be adjusted, and has been processed so as to prevent the adhesion of the resin material in a molten state to the surface of the roller. The pressing roller 60 is configured in the same manner. Further, the cooling roller 70 is configured so as to be rotatable, and so as to rotate following the rotation of the tire casing 17, in the direction of rotation of the tire casing 17 (the direction of the arrow A), when the roller is in a state pressing the resin coated cord 28 onto the outer periphery of the tire casing 17. The pressing roller 60 is configured in the same manner. In addition, the cooling roller 70 is configured such that a liquid (such as water) circulates inside the roller, and the resin coated cord 28 in contact with the surface of the roller can be cooled by heat exchange of the liquid. In a case in which the resin materials in a molten state are allowed to cool naturally, the cooling roller 70 need not be provided.

In the case of winding the resin coated cord 28 on the outer periphery of the tire casing 17, as shown in FIG. 2, the tire casing 17 attached to the tire support apparatus (not shown) is rotated in the direction of the arrow A, and the resin coated cord 28 is fed onto the outer peripheral surface 18A of the crown portion 18, from the mouth portion 46 of the cord supply apparatus 40.

Further, while blowing hot air from the air outlet 52 of the heating apparatus 50 so as to heat and melt the inner peripheral surface of the resin coated cord 28 and the portion of the crown portion 18 on which the resin coated cord 28 is to be provided, the inner peripheral surface of the resin coated cord 28 is allowed to adhere to the melted portion of the crown portion 18. Thereafter, the resin coated cord 28 is pressed onto the outer peripheral surface 18A of the crown portion 18, with the pressing roller 60. At this time, the side surfaces of the resin coated cord 28, which are adjacent with each other in the tire axial direction, are also joined with each other. Subsequently, the outer peripheral surface of the resin coated cord 28 comes into contact with the cooling roller 70, and whereby the melted portion of the crown portion 18 and the melted portion of the resin coated cord 28 are solidified, by being cooled via the resin coated cord 28. As a result, the resin coated cord 28 and the crown portion 18 are welded together.

In this manner, the layer of the resin coated cord 28 is formed on the outer periphery of the tire casing 17, specifically, on the outer periphery of the crown portion 18, by helically winding the resin coated cord 28 on the outer peripheral surface 18A of the crown portion 18 in the tire circumferential direction, and pressing the resin coated cord 28 onto the outer peripheral surface 18A. In order to helically wind the resin coated cord 28 on the outer periphery of the crown portion 18, the position of the mouth portion 46 of the cord supply apparatus 40 can be moved in the tire axial direction along with the rotation of the tire casing 17, or alternatively, the tire casing 17 can be moved in tire axial direction.

It is noted that a tension of the resin coated cord 28 may be adjusted, by putting on the brakes to the reel 42 of the cord supply apparatus 40, or by providing a roller (not shown) for controlling the tension, in a guiding pathway for the resin coated cord 28. The adjustment of the tension allows for preventing the resin coated cord 28 to be arranged in a meandering manner.

Subsequently, a tread before vulcanization is wound around the outer peripheral surface of the belt layer 12. Specifically, for example, while rotating the tire casing 17 provided with the belt layer 12, a belt-like tread before vulcanization is wound once therearound.

Then the tire casing 17 on which the belt layer 12 and the tread before vulcanization have been layered is subjected to vulcanization. Specifically, for example, the tire casing 17 is placed in a vulcanizer or a mold and then heated, so that the tread before vulcanization is vulcanized to form the tread 30. The vulcanization is carried out at a vulcanization temperature of, for example, from 150°C to 220°C, for a vulcanization time of, for example, from 1 minute to 10 minutes.

In the above described manner, the tire 10 according to the first embodiment can be obtained.

### [Second Embodiment]

Next, a second embodiment of the present invention will be described. In the second embodiment, the half body 17A and the half body 17B of the tire casing are welded together by pressing the half bodies against each other, while heating the circumference of the joining portion, without using a resin material for welding. Further, in the second embodiment, an uncoated reinforcing cord member is directly wound on the outer side of the tire frame in the tire radial direction, along the tire circumferential direction, and embedded in the tire frame. Other configurations and the like are the same as those of the first embodiment.

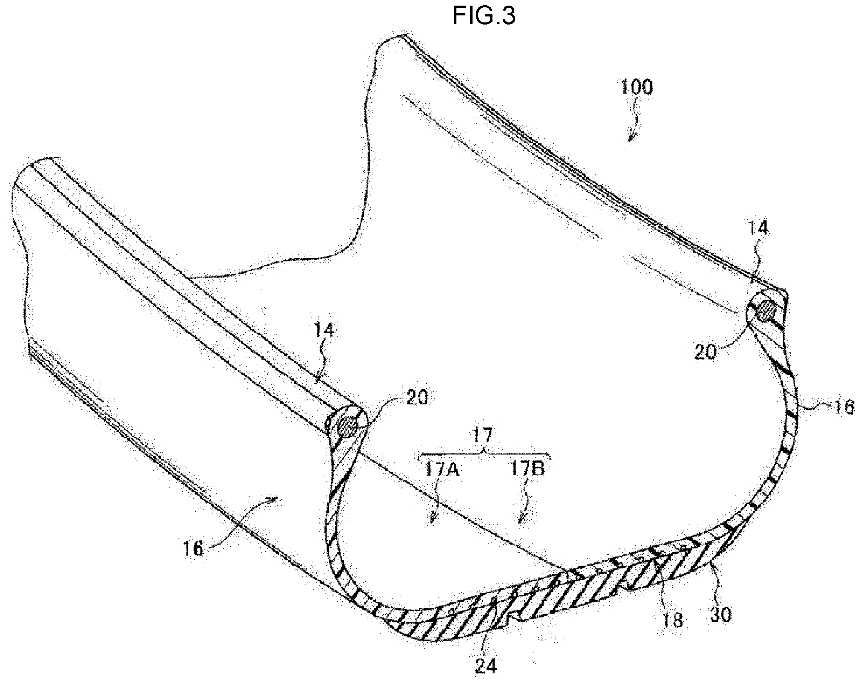

As shown in FIG. 3, in a tire 100 according to the second embodiment, the reinforcing cord 24 is directly wound on the surface on the outer side of the tire casing 17 in the tire radial direction (namely, on the surface of the crown portion), along the tire circumferential direction. In a cross-sectional view taken along the axial direction of the tire casing 17, the reinforcing cord 24 is helically wound on the surface of the crown portion in such a state that at least a part of the reinforcing cord 24 is embedded in the crown portion of the tire casing 17. The tread 30, which is one example of the rubber member, is provided on the outer side in the tire radial direction, of the tire casing 17 on which the reinforcing cord 24 has been wound.

The configurations and the production method other than the above are the same as those of the first embodiment, and thus the description thereof is omitted.

Hereinabove, although the forms for carrying out the invention have been described above by way of the embodiments, these embodiments are merely examples, and various modifications can be made within the scope of the invention according to the appended claims.

## Claims

1. A tire (10, 100) comprising an annular tire frame composed of a plurality of kinds of resin materials,
wherein a resin contained as a main component in a resin material constituting a side portion (16) of the tire frame, which side portion (16) is to be located on an inner side in a vehicle width direction when the tire (10, 100) is mounted on a vehicle, has a melting point of 140°C or higher, or does not have a melting point and has a glass transition point of 40°C or higher, **characterized in that**
an Asker D hardness Ho of the side portion (16) of the tire frame, which side portion (16) is to be located on an outer side in the vehicle width direction when the tire (10, 100) is mounted on the vehicle, is lower than an Asker D hardness Hi of the side portion (16) of the tire frame, which side portion (16) is to be located on the inner side in the vehicle width direction when the tire (10, 100) is mounted on the vehicle,
wherein the Asker D hardness is determined by measuring the hardness of an outer surface of each side portion (16) of the tire frame, in a tire axial direction, using an Asker D hardness tester, under the conditions of a temperature of 25°C and at a load of 5 kg.

2. The tire (10, 100) according to claim 1, wherein the Asker D hardness Ho is 0.84 times or more but less than 1.00 times the Asker D hardness Hi.

3. The tire (10, 100) according to claim 1 or 2, further comprising a reinforcing cord member, which is wound on an outer side of the tire frame in a tire radial direction, along a tire circumferential direction.

4. The tire (10, 100) according to any one of claims 1 to 3, wherein the tire frame is composed of no more than three kinds of resin materials.

5. The tire (10, 100) according to any one of claims 1 to 4, wherein each of the plurality of kinds of resin materials contains a thermoplastic polyamide resin, a thermoplastic polyester resin, or a thermoplastic polyurethane resin, as a main component.

6. The tire (10, 100) according to any one of claims 1 to 5, wherein the tire frame is composed of two or more kinds of resin materials containing resins of a same type, as main components.

## Patentansprüche

1. Reifen (10, 100), der einen ringförmigen Reifenrahmen umfasst, der aus einer Mehrzahl von Harzmaterialarten besteht,
wobei ein Harz, das als Hauptkomponente in einem Harzmaterial enthalten ist, das einen Seitenteil (16) des Reifenrahmens bildet, welcher Seitenteil (16) an einer Innenseite in einer Fahrzeugbreitenrichtung positioniert werden soll, wenn der Reifen (10, 100) an ein Fahrzeug montiert wird, einen Schmelzpunkt von 140 °C oder höher aufweist oder keinen Schmelzpunkt aufweist und einen Glasübergangspunkt von 40 °C oder höher aufweist, **dadurch gekennzeichnet, dass**
eine Asker D-Härte Ho des Seitenteils (16) des Reifenrahmens, welcher Seitenteil (16) an einer Außenseite in der Fahrzeugbreitenrichtung positioniert werden soll, wenn der Reifen (10, 100) an ein Fahrzeug montiert wird, niedriger als eine Asker D-Härte Hi des Seitenteils (16) des Reifenrahmens ist, welcher Seitenteil (16) an der Innenseite in der Fahrzeugbreitenrichtung positioniert werden soll, wenn der Reifen (10, 100) an das Fahrzeug montiert wird,
wobei die Asker D-Härte durch Messen der Härte einer Außenfläche jedes Seitenteils (16) des Reifenrahmens in einer axialen Reifenrichtung unter Anwendung eines Asker D-Härtetesters unter Bedingungen einer Temperatur von 25 °C und einer Belastung von 5 kg bestimmt wird.

2. Reifen (10, 100) nach Anspruch 1, wobei die Asker D-Härte Ho das 0,84-Fache oder mehr, aber weniger als das 1,00-Fache der Asker D-Härte Hi ist.

3. Reifen (10, 100) nach Anspruch 1 oder 2, ferner ein Verstärkungscordelement umfassend, das auf einer Außenseite des Reifenrahmens in einer radialen Reifenrichtung einer Reifenumfangsrichtung entlang gewunden ist.

4. Reifen (10, 100) nach einem der Ansprüche 1 bis 3, wobei der Reifenrahmen aus nicht mehr als drei Harzmaterialarten besteht.

5. Reifen (10, 100) nach einem der Ansprüche 1 bis 4, wobei jede der Mehrzahl von Harzmaterialarten ein thermoplastisches Polyamidharz, ein thermoplastisches Polyesterharz oder ein thermoplastisches Polyurethanharz als Hauptkomponente enthält.

6. Reifen (10, 100) nach einem der Ansprüche 1 bis 5, wobei der Reifenrahmen aus zwei oder mehr Harzmaterialarten als Hauptkomponenten besteht, die Harze eines selben Typs enthalten.

## Revendications

1. Pneumatique (10, 100) comprenant une carcasse de pneumatique annulaire composée d'une pluralité de types de matériaux de résine,
dans lequel une résine contenue comme composant principal dans un matériau de résine constituant une portion latérale (16) de la carcasse de pneumatique, laquelle portion latérale (16) doit être localisée sur un côté interne dans un sens de la largeur du véhicule lorsque le pneumatique (10, 100) est monté sur un véhicule, présente un point de fusion de 140°C ou plus, ou ne présente pas de point de fusion et présente un point de transition vitreuse de 40°C ou plus, **caractérisé en ce que**
une dureté Asker D Ho de la portion latérale (16) de la carcasse de pneumatique, laquelle portion latérale (16) doit être localisée sur un côté externe dans le sens de la largeur du véhicule lorsque le pneumatique (10, 100) est monté sur le véhicule, est inférieure à une dureté Asker D Hi de la portion latérale (16) de la carcasse de pneumatique, laquelle portion latérale (16) doit être localisée sur le côté interne dans le sens de la largeur du véhicule lorsque le pneumatique (10, 100) est monté sur le véhicule,
dans lequel la dureté Asker D est déterminée par mesure de la dureté d'une surface externe de chaque portion latérale (16) de la carcasse de pneumatique, dans une direction axiale du pneumatique, en utilisant un testeur de dureté Asker D, dans des conditions d'une température de 25°C et d'une charge de 5 kg.

2. Pneumatique (10, 100) selon la revendication 1, dans lequel la dureté Asker D Ho est de 0,84 fois ou plus, mais inférieure à 1,00 fois, la dureté Asker D Hi.

3. Pneumatique (10, 100) selon la revendication 1 ou 2, comprenant en outre un élément câblé de renforcement, qui est enroulé sur un côté externe de la carcasse de pneumatique dans une direction radiale du pneumatique, le long d'une direction circonférentielle du pneumatique.

4. Pneumatique (10, 100) selon l'une quelconque des revendications 1 à 3, dans lequel la carcasse de pneumatique est composée de pas plus de trois types de matériaux de résine.

5. Pneumatique (10, 100) selon l'une quelconque des revendications 1 à 4, dans lequel chacun de la pluralité des types de matériaux de résine contient une résine de polyamide thermoplastique, une résine de polyester thermoplastique, ou une résine de polyuréthane thermoplastique comme composant principal.

6. Pneumatique (10, 100) selon l'une quelconque des revendications 1 à 5, dans lequel la carcasse de pneumatique est composée de deux types de matériaux de résine ou plus, contenant des résines d'un même type, comme composants principaux.
